(19) Europäisches Patentamt
European Patent Office
Office européen des brevets

(11) Publication number : 0 441 658 A2

# (12) EUROPEAN PATENT APPLICATION

(21) Application number : 91301084.9

(22) Date of filing : 11.02.91

(51) Int. Cl.$^5$ : H04N 9/64

(30) Priority : 09.02.90 FI 900669

(43) Date of publication of application :
14.08.91 Bulletin 91/33

(84) Designated Contracting States :
DE ES FR GB IT NL SE

(71) Applicant : SALORA OY
Saloranaktu 5-7
SF-241 00 Salo (FI)

(72) Inventor : Oistamo, Kai
Vainamoisenkatu 15E 33
SF-33540 Tampere (FI)
Inventor : Juhola, Janne
Arkkitehdinkatu 15D13
SF-33720 Tampere (FI)
Inventor : Haavisto, Petri
Pyynikintori 6 B 21
SF-33230 Tampere (FI)
Inventor : Nieminen, Ari
Tasanteenraitti 8 F 12
SF-33610 Tampere (FI)
Inventor : Neuvo, Yrjo
Parkanonkatu 3
SF-33720 Tampere (FI)

(74) Representative : Pritchard, Colin Hubert et al
Mathys & Squire 10 Fleet Street
London EC4Y 1AY (GB)

## (54) Method for processing of a component form video signal.

(57) The present invention relates to a method for processing of a component form video signal. The signal components are processed as vectors in a digital form in order to avoid such errors as e.g. cross-chrominance and cross-luminance. Preferably the signal component is that of a sampled video signal.

EP 0 441 658 A2

# METHOD FOR PROCESSING COMPONENT FORM SIGNALS

The present invention relates to a method for processing of a component form signal.

The invention is in principle applicable to the processing of any signals, but in the following, it will be described particularly in connection with sampled component form video signals.

In present television receivers, for example, the separation of luminance and chrominance signals consists of notch filters and passband filters. A luminance signal is obtained by filtering the video signal with a filter with the stop band on the colour subcarrier frequency. Width of the filter's stop band is typically ± 500 kHz. This eliminates most of the chrominance components from the video signal. A chrominance signal is obtained by filtering the video signal with a passband filter with the passband on the colour subcarrier. Generally, width of the filter passband is ± 1.6 MHz. Also a luminance signal with its frequency on this area, is then passed to the chrominance signal.

Because the spectra of the luminance and chrominance signals are superimposed on each other e.g. in a PAL-signal, it is impossible to design a method separating the luminance and chrominance signals completely from each other in all possible situations. An incomplete or bad separation of luminance and chrominance signals causes the luminance in a television receiver to be interpreted as chrominance, i.e. so-called cross-chrominance, or the chrominance signal to be interpreted as luminance, i.e. cross-luminance. Cross-luminance appears as moving points in coloured edges. This can clearly be seen in the caption of the Finnish broadcasting company in the interface of the green and red area. Cross-chrominance again appears on the black-and-white area of the resolution scale as running colour points in the middle of the caption. A moving rainbow pattern, the so-called moire pattern, appears also on the newsreader's striped jacket.

When the size of the receiver increases, elimination of noise in a video signal becomes to an increasing extent more important. Normally, a high degree of white noise occurs in a video signal, and the impulsive noise increases in connection with satellite broadcasts.

Television standards presently in use (PAL, NTSC, SECAM) are based on an interlaced video signal. Display interlacing and low field frequency cause visible problems in a television picture. High vertical frequencies cause a flicker between the lines, and it can be seen in a frequency of 25 Hz (PAL, SECAM). Large bright areas flicker on field frequency. When the object moves, its details become unsharp as the viewer distinguishes the various fields while following the object. This phenomenon is called line crawl. When watching the picture at a relatively short distance, the construction consisting of picture lines is noticeable.

To make the picture quality in the receiver closely correspond with that of the transmitted picture, the above-mentioned errors must be eliminated. The present methods for elimination of cross errors and noise aim at the improvement either of chrominance or luminance signals with the help of a comb filter or at the elimination of errors on a component level by using recursive averagers. Comb filters create a problem because they require complex selection and decision functions and a large memory. Recursive construction to be averaged, on the other hand, requires relatively large stationary areas in order to be efficient. Said constructions also cause a problem concerning the elimination of impulsive noise.

It is possible to increase the television display frequency so that errors due to interlacing and low display frequency can be raised to higher frequencies, when they no longer are distinguishable for the human eye. The current interlaced transmission standard of 50 Hz/2 :1 can be converted either into a noninterlaced (50 Hz/1 :1) or an interlaced (100 Hz/2 :1) standard. The former recudes line flicker and line crawl and increases the feeling of picture sharpness while, however, leaving the problem of flicker of large areas unsolved. The latter decreases also the flicker of large areas. Numerous different conversion methods have been presented.

In the methods used, after demodulation, an operation is carried out on the YUV-level to change display frequency and eliminate colour errors and noise. Each component is handled separately. Because the handling is done component by component, these methods ignore the correlation between the various components.

In a video signal there is a strong correlation between the various components both on the YUV and the RGB level, ie. if there is a change in a parameter of one component it is probably that there will be a change in a parameter of the other components as well. When filtering the components separately, this correlation is not exploited. This may cause errors in the picture when a change appears simultaneously in several components. An example of such an error has been presented in Figure 1, which shows red and green signal components before filtration (on the left) and after filtration (on the right). Here all the components have been filtered with a median filter measuring up to three samples. Filtering causes a faulty colour point in the red signal to appear in the picture before transition.

The object of the present invention is thus to avoid errors mentioned above and to provide such a signal processing method enabling the repair of the signal

components especially in such cases where the signal components in question are known to correlate with each other.

In order to achieve this, the present invention is characterised in that the signal component are processed as vectors and the mutual correlation between at least two components is taken into consideration.

According to an application of the present invention, the signal component is divided into consecutive cycles of equal time duration so that the amplitude of every cycle is equivalent to one vector.

The method of the present invention is of interest especially in the television field. It can be used to eliminate errors from the television picture by taking into consideration the correlation between the various components. The processing method of a video signal according to the present invention exploits more information from a signal than the methods presently in use. Thus, a better result for eliminating errors is achieved with the present invention.

It must be noted that the processing according to the present invention is also applicable to changes of field frequency and to the modification of the picture into a noninterlaced picture upon interpolation of missing fields. Thus it is is possible to exploit a much larger part of the video signal information than when using presently known methods.

Likewise, the method of the present invention can be applied to picture coding. In this case, coding is used to decrease the amount of information to be stored into a memory. When processing various picture element components as vectors, it is upon coding possible to exploit a larger part of the information contained in a signal.

The present invention, its other features and advantages will be evident from the following example taken in conjunction with the accompanying drawings in which :-

Figure 1 presents television signal components correlating with each other and already described earlier ;

Figure 2 presents the same components processed by a method according to the present invention ; and

Figure 3 is a block diagram of an apparatus suitable for the realization of the method of the present invention.

Figure 2 shows two chrominance signal components, red and green, of a sampled video signal, the components being shown before (on the left) and after filtration (on the right). The signal has been filtered with a vector median filter taking an average of three samples. In this case, an error in the red component is avoided.

In the following, an example of the use of the method according to the present invention is reviewed in connection with the elimination of colour errors with reference to the apparatus of Figure 3.

The apparatus consists of a filter 10, time delay or memory circuits 20 and 30, a movement indicator 40 and a decision function circuit 50. The time delay circuit 20 delays an input signal x(t) by one cycle, and the other circuit 30 delays the filter output signal by one sample. The input signal is a sampled video signal equivalent to a series of sampled pictures, each sample being a vector representing the line joining two consecutive points on the component waveforms of Figure 2. Since the points are equally spaced in time, each vector has a magnitude representing the difference in magnitude between two successive points. The two signals in the input and output of memory circuit 20 correspond to elements appearing at the same place in a picture but appearing in consecutive pictures. The output of the other memory circuit 30 corresponds to the preceding output of the selection circuit 10.

The selection circuit 10 receives the input signal $\underline{x}(t)$, the delayed signal $\underline{x}(t-Tp)$ from the circuit 20 and the delayed output signal y(t-1) from the circuit 30. The circuit 10 takes into consideration the correlation between the various signal components. This selection is achieved by adding the amplitudes of all different components of all the sample vectors to other corresponding components of other comparable vectors and by selecting one with the smallest sum of various component amplitudes. This can be expressed by the formula 1.

$$\underline{y}(t)=VMED[\underline{x}(t),\underline{x}(t-Tp),\underline{y}(t-1)] \quad (1)$$

where $\underline{x}(t)$ is the orignal input, $\underline{x}(t-Tp)$ output of the time delay circuit 20 and $\underline{y}(t-1)$ output of the time delay circuit 30. VMED stands for the vector median operation. Vector median from N number of vectors, $\underline{x}_i$=1,2,...,N has been defined as vector $\underline{x}_{vm}$ so that the sum

$$\sum_{i=1}^{N} | \underline{x}_{vm} - \underline{x}_i | \quad (2)$$

is minimized.

The movement indicator 40 provides at its output information on any temporal movement in the picture. The input signal $\underline{x}(t)$ and the output signal $\underline{x}(t-Tp)$ of the time delay circuit 20 form the inputs to circuit 40. Circuit 40 determines the movement between two consecutive pictures. The movement indicator takes into consideration the movement caused by cross-errors. This movement can only be seen either in the luminance signal or the chrominance signal. Efforts have been made to eliminate this faulty movement by processing of the comparable signals.

The release function circuit 50 receives the original input signal $\underline{x}(t)$ and the output signal $\underline{y}(t)$ from the ciruit 10. On the basis of information produced by the movement indicator 40, release function circuit 50

selects as the final output from the present apparatus the signal x(t), equivalent to the initial picture, if it is advantageous for the result, or the signal y(t), which is produced as a consequence of the selection function.

The stated method exploits the information that the errors caused by cross-luminance and cross-chrominance switch from one sample to another and from one picture to another. With the help of recursion, it is possible to increase the filter attenuation while at the same time maintaining lines within one sample width.

The present method does not cause any loss in resolution in case of stationary pictures ; relating to moving pictures, the movement indicator again prevents softening of the picture.

Also linear constructions can be connected to the coupling making it thus possible to increase the efficiency of the filter.

## Claims

1. A method for processing of a component form signal, characterised in that the signal components are processed as vectors and taking into consideration mutual correlation between at least two components of the signal.

2. A method as defined in Claim 1, characterised in that each signal component is handled as a uniform vector line.

3. A method as defined in Claim 1 or 2, characterised in that each signal component is temporally divided into consecutive cycles of equal time duration with the amplitude of each signal component cycle being equivalent to one vector.

4. A method as defined in Claim 1, 2 or 3, characterised in that the signal components are correlated with a vector median filter.

5. A method as defined in any one of the Claims 1 to 4, characterised in that the method is used to filter errors caused by cross-chrominance and cross-luminance in a video signal, to filter noise present in the picture, to interpolate missing fields in order to increase the field frequency of a video signal, in interpolation in order to increase the field frequency of a video signal, or in coding of a video signal.

6. A method for processing a signal comprising a plurality of components charcterised in that at least two of the signal components are sampled to produce vectors, each vector representing a change in a parameter of the signal during a predetermined interval of time, and a correlation is effected between vectors from at least two components.

7. A method as claimed in Claim 6, characterised in that correlation is effected by subjecting the vectors to a vector median operation wherein for N vectors $\underline{x}_i$ = 1,2, ...N a vector median $\underline{x}_{vm}$ is defined such that the sum

$$\sum_{i=1}^{N} |\underline{x}_{vm} - \underline{x}_i$$

is minimised.

8. A method as claimed in Claim 7, characterised in that correlation is effected between a signal component a delayed signal component, and a delayed output of the vector median operation.

9. Apparatus for processing a signal comprising a plurality of components, characterised by means for sampling at least two of the signals to produce vectors, each vector representing a change in a parameter of the signal during a predetermined interval of time, and means for effecting a correlation between vectors from at least two components.

10. Apparatus as claimed in Claim 9, characterised by means for delaying a signal sample, and selection circuit means for effecting a correlation between the signal sample, the delayed sample, and a delayed output of the selection circuit means.

11. Apparatus as claimed in Claim 10, further characterised by movement indicator means for detecting a difference between the input and output of the delay means, a decision function circuit for receiving the sample signal and the output from the selection circuit means, and means for applying to the decision function circuit an output signal from the movement indicator means, whereby there appears at the output of the decision function circuit the said sample signal or the said output from the selection circuit means according to the said difference detected by the movement indicator means.

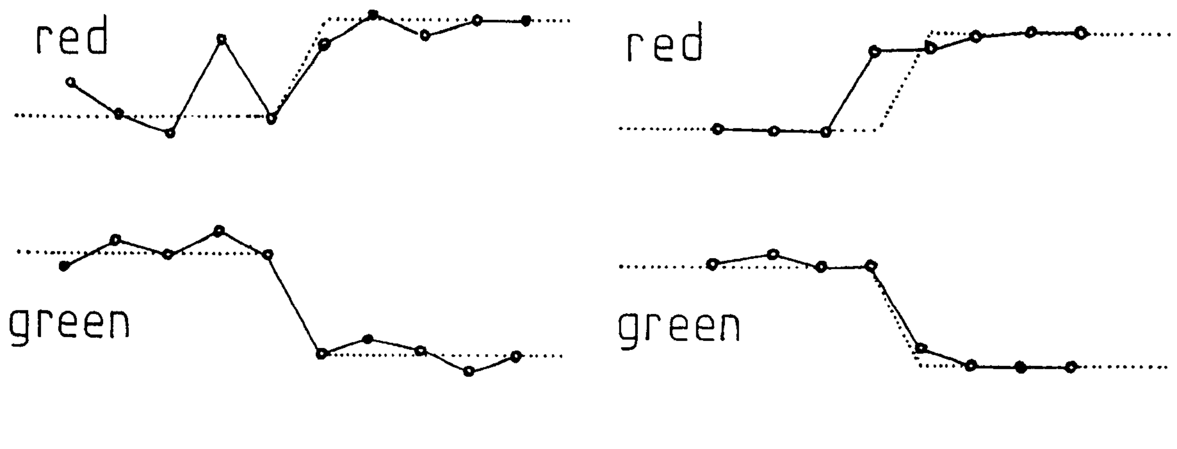


Fig. 1

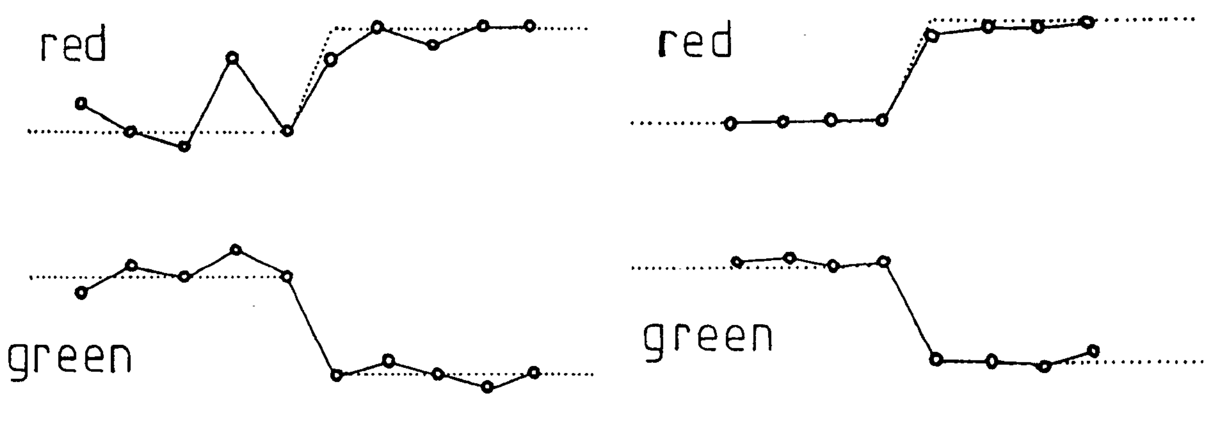


Fig. 2

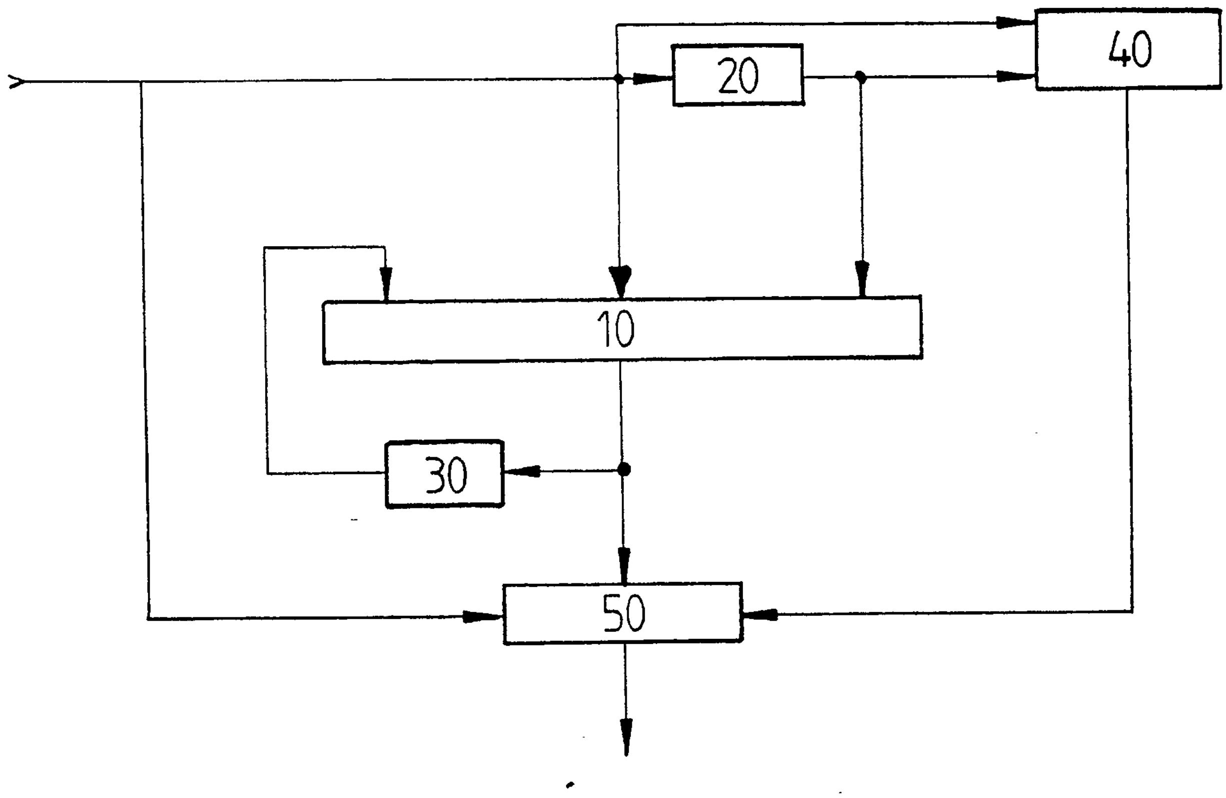


Fig. 3